# EUROPEAN PATENT APPLICATION

(11) **EP 4 564 644 A1**
(43) Date of publication of application: **04.06.2025**
(21) Application number: 24150905.8
(22) Date of filing: 09.01.2024
(51) Int. Cl.: H02J 7/00, H02J 7/14, H02J 7/34

(54) **MARINE HYBRID VESSEL POWER MANAGEMENT**

(30) Priority: 28.11.2023 US 202318521337
(71) Applicant: Stewart & Stevenson LLC, Houston, TX 77007 (US)
(72) Inventor: HANSON, David, Houston 77007 (US); RITTER, James, Houston 77007 (US); CUEVAS, Cristian, Houston 77007 (US)
(74) Representative: Forresters IP LLP

(57) **Abstract**

A system for marine vessel power management is disclosed. The system includes a switchgear and a first generator, the first generator positioned on a marine vessel and in electrical communication with the switchgear. The system also includes one or more batteries, the one or more batteries positioned on the marine vessel and in electrical communication with the switchgear and shore power where shore power is in electrical communication with the switchgear and wherein shore power includes shore power rectifier. The system further includes household load in electrical connection with the switchgear and propulsion motors in electrical connection with the switchgear. In addition, the system includes a control system, the control system in electrical connection with the switchgear. The control system is programmed.

## Description

### Technical Field/Field of the Disclosure

The present disclosure relates generally to systems and methods for selecting from available power sources for a marine vessel.

### Background of the Disclosure

In certain traditional systems, a marine vessel, such as a barge, may have electrical needs for both propulsion and household load. Household load includes, for example, lighting, power for appliances, power for computing systems, and other non-propulsion electrical needs. While household load may fluctuate, household load typically fluctuates much less than electrical needs of propulsion systems. In some traditional systems, electrical power to the marine vessel may be sourced from several sources, including batteries, generators, and shore power, which is typically from an electrical grid. These traditional systems typically do not optimize power sourcing, resulting in inefficient management of power sources.

### Summary

A system for marine vessel power management is disclosed. The system includes a switchgear and a first generator, the first generator positioned on a marine vessel and in electrical communication with the switchgear. The system also includes one or more batteries, the one or more batteries positioned on the marine vessel and in electrical communication with the switchgear, and shore power where shore power is in electrical communication with the switchgear and wherein shore power includes shore power rectifier. The system further includes household load in electrical connection with the switchgear and propulsion motors in electrical connection with the switchgear. In addition, the system includes a control system, the control system in electrical connection with the switchgear. The control system is programmed to, stepwise: determine if shore power is available and if shore power is available, disable propulsion motors and supply electricity from shore power to the household load, and determine if a battery charge level of the one more batteries is less than an SOC limit. In addition, the control system is programmed to if the battery charge level is less than the SOC limit, charge the one or more batteries to the SOC limit and if the battery charge is greater than or equal to the SOC limit, set the shore power rectifier to hold zero battery current. Further, the control system is programmed to determine a level of charge of the one or more batteries and if the level of charge of the one or more batteries is below an SOC fault limit, communicating a fault. Also, the control system is programmed to if the level of charge of the one or more batteries is below an SOC low limit 1, above the SOC fault limit and below an SOC high limit 1, wherein the SOC high limit 1 is higher than the SOC low limit 1, operate the first generator.

### Brief Description of the Drawings

The present disclosure is best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
FIG. 1 is a schematic diagram of an electrical system of a marine vessel consistent with certain embodiments of the present disclosure.
FIGs. 2A and 2B are a flowchart of a system and method for selecting from various electrical sources for a marine vessel consistent with certain embodiments of the present disclosure.
FIG. 3 is a graphical representation of a battery charging status consistent with certain embodiments of the present disclosure.

### Detailed Description

It is to be understood that the following disclosure provides many different embodiments, or examples, for implementing different features of various embodiments. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

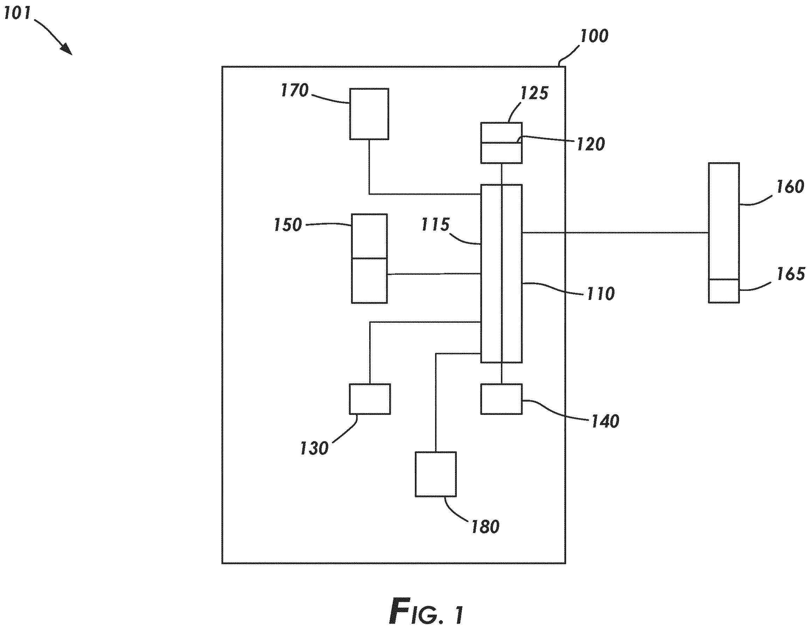

FIG. 1 depicts an electrical system for a marine vessel consistent with certain embodiments of the present disclosure. Electrical system 101 of marine vessel 100 may include switchgear 110 in electrical connection with control system 120. Control system 120 may include a central processing unit (CPU) 125, a clock, memory, and a communications interface with switchgear 110 for transmitting instructions on which electrical sources to isolate or engage. The CPU may be programmed with instructions, as described below. In other embodiments, control system 120 may be a part of switchgear 110. In certain embodiments, DC bus 115 may be a part of switchgear 110.

Electrical system 101 may also include first generator 130 positioned on the marine vessel. As one of ordinary skill in the art will appreciate with the benefit of this disclosure, first generator 130 may be any generator including, but not limited to natural gas, diesel, fuel cell, or solar generators. First generator 130 may be in electrical connection with switchgear 110. Similarly, in certain embodiments, electrical system 101 may include second generator 140. As one of ordinary skill in the art will appreciate with the benefit of this disclosure, second generator 140 may be any generator including, but not limited to natural gas, diesel, fuel cell, or solar generators. Second generator 140 may be in electrical connection with switchgear 110. First generator 130 and second generator 140 may be the same or different and may have different power outputs.

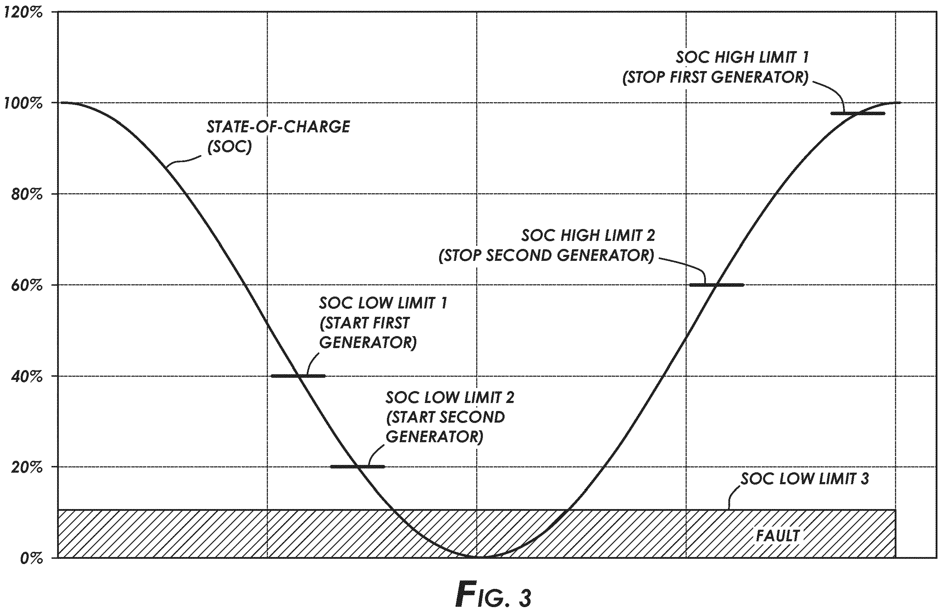

Electrical system 101 may further include one or more batteries 150. One or more batteries 150 may be positioned on marine vessel 100 and be in electrical communication with switchgear 110. As shown in FIG. 3, one or more batteries 150 may have State of Charge (SOC) limits for purposes of determining the charge level of one or more batteries 150. While particular values for these SOC limits are shown in FIG. 3, one of ordinary skill in the art with the benefit of this disclosure would understand that these SOC limits may be different than those shown, based, for example, on the type of one or more batteries 150 or as desired by the operator. As shown in FIG. 3, for example, the SOC low limit 1 may be 40% and the SOC low limit 2 may be 20%. The SOC fault limit may be 10%. The SOC high limit 2 may be 60% and the SOC high limit 1 is about approximately 100%. In another example, SOC high limit 1 may be between 80% and 100% or between 90 and 99%. In addition, one or more batteries 150 may have a state of charge high limit. SOC low limit 1, SOC low limit 2, SOC high limit 2 and SOC high limit 2 may differ from these values and may be preselected by the operator based on characteristics of one or more batteries 150 as long as:
- SOC low limit 1 is above SOC low limit 2 and below SOC high limit 2
- SOC low limit 2 is above SOC fault limit
- SOC high limit 2 is below SOC high limit 1.

In certain embodiments, electrical system 101 may also include shore power source 160. Shore power source 160 may be, for example, line power. Shore power source 160 may be in electrical communication with switchgear 110. Shore power source 160 may include shore power rectifier 165.

In certain embodiments, electrical system 101 may further include electrical loads such as household load 170 and propulsion motors 180. Both household load 170 and propulsion motors 180 are in electrical connection with switchgear 110.

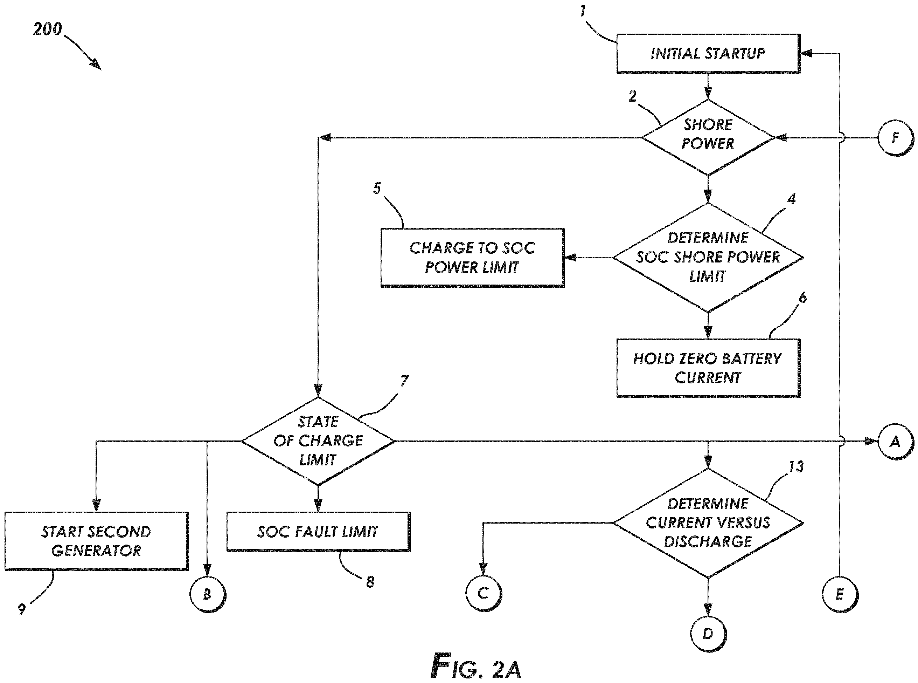

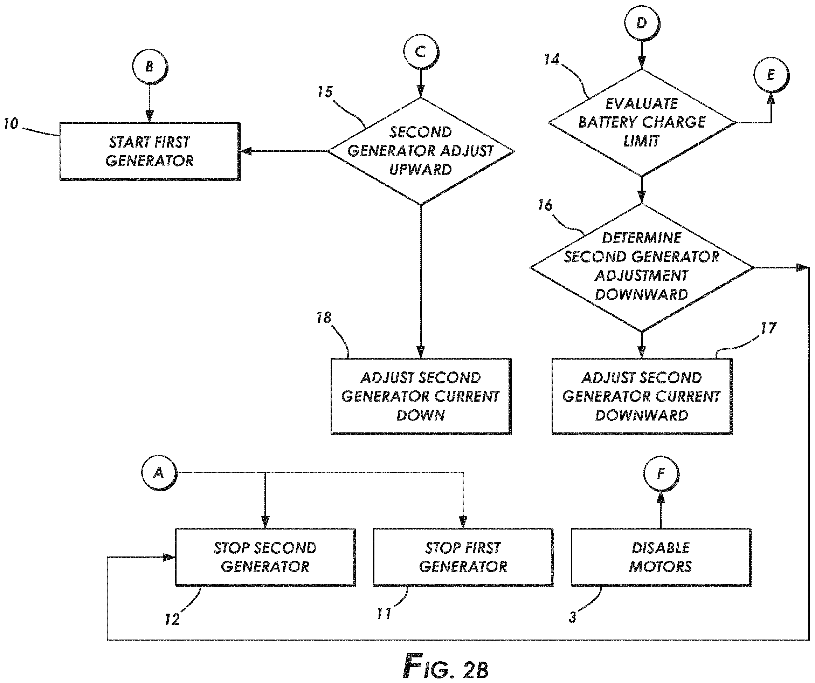

FIG. 2 is a flowchart of CPU instructions 200 for controlling electrical system 101 of the present disclosure. In initial startup 1, control system 120 directs a startup of electrical system 101. In shore power 2, control system 120 determines where shore power is available. If so, in disable motors 3, control system 120 directs propulsion motors 180 to be disabled and supplies household load 170 from shore power source 160. Further, in determine SOC limit 4, control system 120 determines if the battery charge level of one or more batteries 150 is less than SOC limit. If so, shore power rectifier 165 is set to charge one or more batteries 150 according to SOC limit in charge to SOC shore power limit 5. If not, shore power rectifier is set to hold zero battery current in hold zero battery current 6.

Control system 120, in state of charge limit 7, determines what level of charge one or more batteries 150 have. If the battery state of charge is below SOC fault limit, then a fault is communicated through control system 120 in SOC fault limit 8. If the level of charge is below SOC low limit 2 but above SOC fault limit (or the DC bus voltage is below minimum DC bus voltage), then when present, second generator starts, if not already running, in start second generator 9. Minimum DC bus voltage may be selected by an operator, for example, based on desired minimum voltages of propulsion motors 180 or household load 170. If the level of charge is below SOC low limit 1 (or if the DC bus voltage is lower than minimum DC bus voltage), then first generator 130 is started, in start first generator 10. Thus, if second generator 140 is running, so too is first generator 130. If the level of charge is above SOC high limit 1, then first generator 130 stops running, in stop first generator 11. If the level of charge is above SOC high limit 2, second generator 140 stops running in stop second generator 12. If the level of charge is between SOC high limit 2 and SOC low limit 1, control system 120 decides whether the battery discharge current of one or more batteries 150 is less than a pre-selected battery discharge limit in determine current versus discharge 13. Battery discharge limit may be established by a battery management system to control how quickly one or more batteries 150 discharge, based, for example on one or more batteries 150 cell temperature, the state of charge of one or more batteries 150, or the status of one or more batteries 150. If so, then control system 120 evaluates whether the battery current is less than the battery discharge limit in evaluate battery charge limit 14. If in determine current versus discharge 13 the required battery discharge current is more than the battery discharge limit, then second generator current is evaluated to determine if second generator current can be increased in second generator adjust upward 15. If so, the second generator current is increased upwards. If in evaluate battery charge limit 14, the battery current is less than the battery charge limit, electrical system 101 returns to initial startup 1. In evaluate battery charge limit 14, the battery current is not less than the battery charge limit, control system 120 determines whether second generator current can be adjusted downward to an ideal load in determine second generator adjustment downward 16. If so, then second generator current is adjusted downward until the battery charge current is less than the charge current limit in adjust second generator current downward 17. If second generator current cannot be adjusted downward, control system 120, second generator 140 stops running in stop second generator 12. In generator adjust upward 15, if control system 120 determines that that second generator current cannot be adjusted to the ideal load, then then first generator 130 is started, in start first generator 10. If control system 120 determines that second generator current can be adjusted upward, then second generator current is adjusted upward until the battery charge current is less than the discharge current limit in adjust second generator current up 18.

With modulation of the battery and generator use, control system 120 reduces stopping and starting of the first generator 130 and second generator 140 - avoiding unnecessary and inefficient cycling of the generators. Such reductions also optimize operational health and potentially operational life of system components. For example, if SOC low limit 2 and SOC high limit 2 are close in charge value, second generator 140 may cycle more frequently than if those two values were further apart. As starting second generator 140 may result in start-up and shutdown operations when second generator 140 may be using fuel or electricity but not providing efficient current generation. If SOC low limit 2 and SOC high limit 2 are far apart in charge value, second generator 140 may not operate as frequently, resulting in stress on one or more batteries 150.

The foregoing outlines features of several embodiments so that a person of ordinary skill in the art may better understand the aspects of the present disclosure. Such features may be replaced by any one of numerous equivalent alternatives, only some of which are disclosed herein. One of ordinary skill in the art should appreciate that they may readily use the present disclosure as a basis for designing or modifying other processes and structures for carrying out the same purposes and/or achieving the same advantages of the embodiments introduced herein. One of ordinary skill in the art should also realize that such equivalent constructions do not depart from the spirit and scope of the present disclosure and that they may make various changes, substitutions, and alterations herein without departing from the spirit and scope of the present disclosure.
The present invention is now described with reference to the following clauses:
1. A system for marine vessel power management comprising:
   a switchgear;
   a first generator, the first generator configured to be positioned on a marine vessel and in electrical communication with the switchgear;
   one or more batteries, the one or more batteries configured to be positioned on the marine vessel and in electrical communication with the switchgear;
   a shore power source where the shore power source is in electrical communication with the switchgear and wherein the shore power source includes a shore power rectifier;
   a household load in electrical connection with the switchgear;
   propulsion motors in electrical connection with the switchgear; and
   a control system, the control system in electrical connection with the switchgear, the control system programmed to, stepwise:
      determine if shore power is available from the shore power source;
      if shore power is available, disable the propulsion motors and supply electricity from shore power to the household load, and determine if a battery charge level of the one more batteries is less than a state of charge (SOC);
      if the battery charge level is less than the SOC, charge the one or more batteries to the SOC;
      if the battery charge is greater than or equal to the SOC, set the shore power rectifier to hold zero battery current;
      determine a level of charge of the one or more batteries;
      if the level of charge of the one or more batteries is below an SOC fault limit, communicating a fault; and
      if the level of charge of the one or more batteries is below an SOC low limit 1, above the SOC fault limit and below an SOC high limit 1, wherein the SOC high limit 1 is higher than the SOC low limit 1, operate the first generator.
2. The system of clause 1, wherein the control system is programmed to:
   operate the second generator if the level of charge of the one or more batteries is below an SOC low limit 2, above the SOC fault limit, and below an SOC high limit 2, wherein the SOC low limit 1 is below the SOC low limit 1, the SOC high limit 2, and the SOC high limit 1, but above the SOC fault limit.
3. The system of clause 1 or clause 2, wherein the control system is programmed to:
   if the level of charge of the one or more batteries is between SOC high limit 2 and SOC low limit 1 and a battery discharge current of the one or more batteries is less than a pre-selected battery discharge limit; and
   if a battery current is less than the battery discharge limit; and
   if a second generator current may be increased, increase the second generator current if the second generator is running.
4. The system of any one of clauses 1 to 3, wherein the control system is programmed to:
   if the battery current is not less than the battery charge limit, adjust the second generator current downward until the battery charge is less than the charge current limit.
5. The system of any one of clauses 1 to 4, wherein the control system includes a central processing unit, a clock, memory, and a communications interface with the switchgear.
6. The system of any one of clauses 1 to 5, wherein the switchgear comprises a DC bus.
7. The system of any one of clauses 1 to 6, wherein the first generator is a natural gas, a diesel, or a solar generator.
8. The system of any one of clauses 1 to 7, wherein the second generator is natural gas, a diesel, fuel cell, or a solar generator.
9. The system of any one of clauses 1 to 8, wherein the first generator and the second generator have different power outputs.
10. The system of any one of clauses 1 to 9, wherein the SOC low limit 1 is 40% of a capacity of one or more batteries.
11. The system of any one of clauses 1 to 10, wherein the SOC low limit 2 is 20% of a capacity of one or more batteries.
12. The system of any one of clauses 1 to 11, wherein the SOC fault limit is 10% of a capacity of one or more batteries.
13. The system of any one of clauses 1 to 12, wherein the SOC high limit 2 is 60% of a capacity of one or more batteries.
14. The system of any one of clauses 1 to 13, wherein shore power is line power.
15. The system of any one of clauses 1 to 14, wherein household power includes lighting, power for appliances, power for computing systems, or non-propulsion electrical needs.

## Claims

1. A system for marine vessel power management comprising:
a switchgear;
a first generator, the first generator configured to be positioned on a marine vessel and in electrical communication with the switchgear;
one or more batteries, the one or more batteries configured to be positioned on the marine vessel and in electrical communication with the switchgear;
a shore power source where the shore power source is in electrical communication with the switchgear and wherein the shore power source includes a shore power rectifier;
a household load in electrical connection with the switchgear;
propulsion motors in electrical connection with the switchgear; and
a control system, the control system in electrical connection with the switchgear, the control system programmed to, stepwise:
determine if shore power is available from the shore power source;
if shore power is available, disable the propulsion motors and supply electricity from shore power to the household load, and determine if a battery charge level of the one more batteries is less than a state of charge (SOC);
if the battery charge level is less than the SOC, charge the one or more batteries to the SOC;
if the battery charge is greater than or equal to the SOC, set the shore power rectifier to hold zero battery current;
determine a level of charge of the one or more batteries;
if the level of charge of the one or more batteries is below an SOC fault limit, communicating a fault; and
if the level of charge of the one or more batteries is below an SOC low limit 1, above the SOC fault limit and below an SOC high limit 1, wherein the SOC high limit 1 is higher than the SOC low limit 1, operate the first generator.

2. The system of claim 1, wherein the control system is programmed to:
operate the second generator if the level of charge of the one or more batteries is below an SOC low limit 2, above the SOC fault limit, and below an SOC high limit 2, wherein the SOC low limit 1 is below the SOC low limit 1, the SOC high limit 2, and the SOC high limit 1, but above the SOC fault limit.

3. The system of claim 1 or claim 2, wherein the control system is programmed to:
if the level of charge of the one or more batteries is between SOC high limit 2 and SOC low limit 1 and a battery discharge current of the one or more batteries is less than a pre-selected battery discharge limit; and
if a battery current is less than the battery discharge limit; and
if a second generator current may be increased, increase the second generator current if the second generator is running.

4. The system of any one of claims 1 to 3, wherein the control system is programmed to:
if the battery current is not less than the battery charge limit, adjust the second generator current downward until the battery charge is less than the charge current limit.

5. The system of any one of claims 1 to 4, wherein the control system includes a central processing unit, a clock, memory, and a communications interface with the switchgear.

6. The system of any one of claims 1 to 5, wherein the switchgear comprises a DC bus.

7. The system of any one of claims 1 to 6, wherein the first generator is a natural gas, a diesel, or a solar generator.

8. The system of any one of claims 1 to 7, wherein the second generator is natural gas, a diesel, fuel cell, or a solar generator.

9. The system of any one of claims 1 to 8, wherein the first generator and the second generator have different power outputs.

10. The system of any one of claims 1 to 9, wherein the SOC low limit 1 is 40% of a capacity of one or more batteries.

11. The system of any one of claims 1 to 10, wherein the SOC low limit 2 is 20% of a capacity of one or more batteries.

12. The system of any one of claims 1 to 11, wherein the SOC fault limit is 10% of a capacity of one or more batteries.

13. The system of any one of claims 1 to 12, wherein the SOC high limit 2 is 60% of a capacity of one or more batteries.

14. The system of any one of claims 1 to 13, wherein shore power is line power.

15. The system of any one of claims 1 to 14, wherein household power includes lighting, power for appliances, power for computing systems, or non-propulsion electrical needs.
